# EUROPÄISCHE PATENTSCHRIFT

(11) **EP 2 531 949 B1**
(45) Veröffentlichungstag und Bekanntmachung des Hinweises auf die Patenterteilung: **23.05.2018**
(21) Anmeldenummer: 11701954.7
(22) Anmeldetag: 01.02.2011
(51) Int. Cl.: G06F 21/77

(54) **VERFAHREN ZUM AUSFÜHREN EINER ANWENDUNG**
METHOD FOR EXECUTING AN APPLICATION
PROCÉDÉ D'EXÉCUTION D'UNE APPLICATION

(30) Priorität: 02.02.2010 DE 102010006572
(43) Veröffentlichungstag der Anmeldung: 12.12.2012
(73) Patentinhaber: Giesecke+Devrient Mobile Security GmbH, 81677 München (DE)
(72) Erfinder: JAUERING, Matthias, 81379 München (DE); HILMER, Dorothee, 81929 München (DE); HOLTMANN, Ludger, 85664 Hohenlinden (DE); TREGER, Jörn, 83022 Rosenheim (DE); FLADEE, Ingeborg, 80637 München (DE)
(86) Internationale Anmeldenummer: PCT/EP2011/000451
(87) Internationale Veröffentlichungsnummer: WO 2011/095320

(56) Entgegenhaltungen:
- EP-A2- 1 892 639
- WO-A1-2009/138892
- W. Rankl, W. Effing: "Handbuch der Chipkarten", 1. Januar 2008 (2008-01-01), Hanser Verlag, München, XP002643427, ISBN: 978-3-446-40402-1 Seiten 494-495, das ganze Dokument
- HAGAI BAR-EL ET AL: "The Sorcerer's Apprentice Guide to Fault Attacks", INTERNET CITATION, 7. Mai 2004 (2004-05-07), XP002329915, Gefunden im Internet: URL:http://web.archive.org/web/20041016071 838/eprint.iacr.org/2004/100 [gefunden am 2005-05-27]

## Beschreibung

Die Erfindung betrifft ein Verfahren zum Ausführen einer Anwendung, die ausführbaren nativen oder interpretierbaren Code umfasst und Funktionen eines Betriebssystems aufruft, wobei das Betriebssystem ein Ergebnis eines jeweiligen Funktionsaufrufs an die Anwendung überträgt. Die Erfindung betrifft weiterhin einen tragbaren Datenträger, insbesondere eine Chipkarte oder ein Sicherheitsmodul.

Auf dem Gebiet von Chipkarten sind sog. Fehler induzierende Angriffe bekannt, die den Programmablauf oder den Speicherinhalt eines Speichers der Chipkarte manipulieren. Beispielsweise kann bei einem Angriff mit Hilfe der differentiellen Fehleranalyse (DFA) versucht werden, geheime Schlüssel durch selektive Einstreuung von Fehlberechnungen zu erspähen. Mit Hilfe eines Lichtangriffs wird versucht, einen Sicherheitsstatus der Chipkarte gezielt zu verändern, um geheime Daten auszulesen, die ansonsten nur beim Vorliegen einer Authentisierung lesbar wären. Gegen derartige Angriffe wurden diverse Abwehrmechanismen entwickelt, die sowohl auf Softwareals auch auf Hardwaremaßnahmen basieren. Die Angriffserkennung erfolgt dabei regelmäßig durch ein Betriebssystem der Chipkarte oder durch die von Anwendungen auf der Chipkarte aufrufbaren Funktionen des Betriebssystems.

Unterschiedliche Abwehrmaßnahmen gegen Fehlerangriffe werden in "The Sorcerer's Apprentice Guide to Fault Attacks" von Hagai Bar-El et al aus dem Jahr 2004 beschrieben.

In WO 2009/138892 A1 wird der Inhalt einer ersten Speicheradresse nach dem Lesen von einer zweiten Speicheradresse erneut ausgelesen, um einen möglichen Angriff zu erkennen.

Ein Chipkartenbetriebssystem, welches einer Anwendung eine Schnittstelle zum Zugriff auf Funktionen des Betriebssystems bereitstellt, ist aus dem "Handbuch der Chipkarten" von W. Rankl aus dem Jahr 2008 bekannt.

Bei einem tragbaren Datenträger mit einer Anwendung, die Funktionen eines Betriebssystems aufruft und ausführbaren nativen oder interpretierbaren Code enthält, kann das Ergebnis des Funktionsaufrufs durch einen Angriff, beispielsweise einen Lichtangriff, verfälscht werden, ohne dass die Anwendung eine Möglichkeit hat, die Verfälschung zu erkennen.

Es ist daher Aufgabe der vorliegenden Erfindung, ein Verfahren anzugeben, mit dem die Sicherheit beim Ausführen einer Anwendung weiter verbessert werden kann. Eine weitere Aufgabe der Erfindung ist es, einen tragbaren Datenträger anzugeben, welcher beim Ausführen einer Anwendung eine verbesserte Sicherheit aufweist.

Diese Aufgaben werden gelöst durch ein Verfahren gemäß den Merkmalen des Patentanspruchs 1 sowie einen tragbaren Datenträger gemäß den Merkmalen des Patentanspruchs 12. Vorteilhafte Ausgestaltungen ergeben sich aus den abhängigen Patentansprüchen.

Die Erfindung schafft ein Verfahren zum Ausführen einer Anwendung, die ausführbaren nativen oder interpretierbaren Code umfasst und Funktionen eines Betriebssystems aufruft, wobei das Betriebssystem ein Ergebnis eines jeweiligen Funktionsaufrufs an die Anwendung überträgt. Erfindungsgemäß überprüft die Anwendung das Ergebnis eines jeweiligen Funktionsaufrufs auf eine Verfälschung hin, um einen Angriff zu erkennen. Durch das erfindungsgemäße Vorgehen kann die Sicherheit gegenüber Manipulationen erhöht werden. Im Unterschied zum Stand der Technik erfolgt eine Überprüfung einer Manipulation nicht durch das Betriebssystem, sondern durch die Anwendung selbst, welche die Funktionen des Betriebssystems aufruft. Insbesondere wird bei solchen Anwendungen eine Verbesserung der Sicherheit geschaffen, bei denen das Betriebssystem der Anwendung als Ergebnis lediglich eine boolesche Variable liefert. Dies ist beispielsweise beim Verifizieren von Signaturen der Fall. Hier wird jeder Ergebniswert, der ungleich Null ist, durch die Anwendung als wahr interpretiert. Dabei ist die Wahrscheinlichkeit für einen erfolgreichen Angriff auf den von dem Betriebssystem an die Anwendung übertragenen Ergebniswert stark erhöht, da jedes verfälschte Ergebnis zur erfolgreichen Verifikation einer ungültigen Signatur führt. Durch die Erfindung erfolgt die Überprüfung der an die Anwendung übertragenen Ergebnisse durch die Anwendung selbst, wodurch im Falle eines erkannten Angriffs geeignete Gegenmaßnahmen ergriffen werden können.

Das erfindungsgemäße Verfahren wird insbesondere auf einem tragbaren Datenträger, insbesondere einer Chipkarte oder einem Sicherheitsmodul, ausgeführt.

Zweckmäßigerweise wird zur Überprüfung des Ergebnisses eines jeweiligen Funktionsaufrufs eine weitere Funktion des Betriebssystems durch die Anwendung aufgerufen. Dabei ist insbesondere vorgesehen, dass der Aufruf einer jeweiligen Funktion des Betriebssystems durch die Anwendung über eine erste Schnittstelle und der Aufruf der weiteren Funktion durch die Anwendung über eine zweite, insbesondere proprietäre, Schnittstelle erfolgt. Über die zweite Schnittstelle können die Ergebnisse vorangegangener, sicherheitsrelevanter Vorgänge auf einfache Weise überprüft werden, ohne die Arbeits- und Funktionsweise der ersten Schnittstelle beeinflussen zu müssen. Durch die Erweiterung um die zweite Schnittstelle kann damit auch eine Überprüfung von durch ein Betriebssystem übertragenen Ergebnissen in solchen Umgebungen erfolgen, welche standardisiert und nicht abwandelbar sind.

Eine weitere Ausgestaltung sieht vor, dass eine zentrale, einheitliche Überprüfung jeweiliger Ergebnisse unterschiedlicher Funktionsaufrufe durchgeführt wird. Insbesondere ist vorgesehen, dass eine Überprüfung des letzten Funktionsaufrufs erfolgt. Anhand dieser Überprüfung kann festgestellt werden, ob die aufgerufenen Funktionen tatsächlich ausgeführt wurden und ob der erhaltene Rückgabewert auch dem tatsächlichen Ergebnis entspricht. Auf diese Weise können Angriffe mit hoher Wahrscheinlichkeit erkannt werden.

Eine weitere Ausgestaltung sieht vor, dass zur Überprüfung des Ergebnisses eines jeweiligen Funktionsaufrufs das von dem Betriebssystem ermittelte und an die Anwendung übertragene Ergebnis an das Betriebssystem übertragen und durch dieses verifiziert wird. Die Übertragung des Ergebnisses von der Anwendung an das Betriebssystem erfolgt dabei vorzugsweise über die zweite Schnittstelle, wodurch bestehende Standards hinsichtlich der Kommunikation zwischen Anwendung und Betriebssystem über die erste Schnittstelle nicht verändert oder erweitert werden brauchen.

In vorteilhafter Weise kann in Abhängigkeit des Ergebnisses der Überprüfung das weitere Verhalten des tragbaren Datenträgers durch die Anwendung gesteuert werden. Die Steuerung des weiteren Verhaltens des tragbaren Datenträgers umfasst eine Zeitverzögerung und/oder eine Abschaltung des Datenträgers. Die jeweils ausgewählte Reaktion kann in Abhängigkeit des Ergebnisses der Überprüfung durch die Anwendung erfolgen.

Ein Angriff auf den Aufruf der Funktion könnte bereits die aufgerufene Funktion verändern. Eine weitere Absicherung ist gegen (korrekte) Ergebnisse einer falschen, d.h. nicht der von der Anwendung aufgerufenen, Funktion möglich. Neben dem Ergebnis eines Funktionsaufrufes kann die Anwendung auch prüfen, ob tatsächlich die aufgerufene Funktion ausgeführt wurde. Die Anwendung überträgt einen Prüfparameter an das Betriebssystem, der die aufgerufene Funktion identifiziert. Das Betriebssystem hat einen Referenzparameter für die (zuletzt) aufgerufene Funktion gespeichert und prüft diesen gegen den Prüfparameter. Der Parameter wird vorzugsweise zusammen mit dem Ergebnis an das Betriebssystem übertragen und der Parameter im Rahmen der Prüfung des Ergebnisses geprüft. Sollte also eine andere als die aufgerufene Funktion das Ergebnis geliefert haben, wird dies im Rahmen der Prüfung erkannt.

Der überprüfte Funktionsaufruf soll vorzugsweise der letzte Funktionsaufruf sein. Nicht alle Funktionsaufrufe der Anwendung müssen aber sicherheitsrelevante Funktionen sein. Die weiteren Funktionsaufrufe werden jedoch nicht wie vorliegend vorgeschlagen abgesichert, ihr Ergebnis wird also vom Betriebssystem nicht für eine Prüfung gespeichert. Insbesondere soll die Überprüfung des Ergebnisses jeweils für den letzten sicherheitsrelevanten Funktionsaufruf möglich sein. Nur die Ergebnisse sicherheitsrelevanter Funktionsaufrufe sind überprüfbar. Es können weitere (nicht sicherheitsrelevante) Funktionsaufrufe zwischen dem Aufruf der sicherheitsrelevanten Funktion und dem Prüfen des Ergebnisses der zuletzt aufgerufenen sicherheitsrelevanten Funktion durch die Anwendung stattfinden.

In einer konkreten Ausgestaltung wird als Anwendung ein Java Card Applet und als Betriebssystem eine Java Card VM (Virtuelle Maschine) verwendet. Bei dem Datenträger, auf dem Anwendung und Betriebssystem laufen, handelt es sich bevorzugt um eine Java-Card.

Ein erfindungsgemäßer Datenträger, der insbesondere in Gestalt einer Chipkarte oder eines Sicherheitsmoduls ausgebildet ist, ist dazu ausgebildet, das oben beschriebene, erfindungsgemäße Verfahren auszuführen.

Die Erfindung wird nachfolgend näher anhand der Figuren beschrieben. Es zeigen:
- Fig. 1: einen schematischen Ablauf des erfindungsgemäßen Verfahrens, und
- Fig. 2: eine schematische Darstellung eines erfindungsgemäßen tragbaren Datenträgers.

Die vorliegende Erfindung geht von einer Anwendung A aus, die Funktionen eines Betriebssystems BS aufruft. Die Anwendung A enthält zu diesem Zweck ausführbaren nativen oder interpretierbaren Code. Obwohl die Erfindung allgemein auf jegliche Anwendung, die auf einem Betriebssystem läuft, anwendbar ist, wird im nachfolgend beschriebenen Ausführungsbeispiel von einer Java-Karte als tragbarem Datenträger ausgegangen, auf welcher eine virtuelle Maschine Funktionsaufrufe eines Java-Applets bearbeitet.

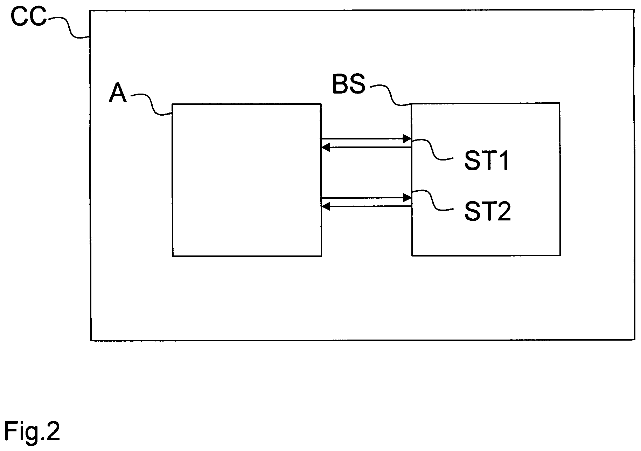

Die Anwendung A kann über zwei Schnittstellen ST1, ST2 auf das Betriebssystem BS der Java-Card CC zugreifen (vgl. Fig. 2). Über die erste Schnittstelle ST1 werden durch die Anwendung A Funktionen des Betriebssystems BS aufgerufen. Bei der ersten Schnittstelle ST1 handelt es sich beispielsweise um eine Java-Card API. Die zweite Schnittstelle ST2, welche insbesondere proprietärer Natur ist, bietet der Anwendung zusätzliche Funktionen, welche geeignet sind die Sicherheit zu erhöhen. Insbesondere kann die Anwendung mittel der Schnittstelle ST2, ein von dem Betriebssystem BS an die Anwendung A in Folge eines Funktionsaufrufs übertragenes Ergebnis überprüfen.

Das Vorsehen der zusätzlichen, zweiten Schnittstelle ST2 behebt sicherheitskritische Schwachstellen, wie diese beispielsweise in der Java-Card API von Sun Microsystems bestehen. Die Java-Card API liefert mit Ausnahme des Befehls "Verify PIN", bei dem ein Status modifiziert wird, der von der Anwendung beim Betriebssystem abgefragt werden kann, einen booleschen Wert an die Anwendung A zurück. Bei sicherheitsrelevanten Funktionen, wie z.B. dem Verifizieren von Signaturen, wird als Rückgabe somit lediglich ein boolescher Wert verwendet, der an die Anwendung A zurückgegeben wird. Zwar wird dieser intern zu einem 2-Bytewert erweitert. Jedoch wird jeder Wert der ungleich Null ist, als wahr interpretiert. Daher ist die Wahrscheinlichkeit für einen erfolgreichen Angriff auf den Rückgabewert stark erhöht, da jedes verfälschte Ergebnis zur erfolgreichen Verifikation einer ungültigen Signatur führt, ohne dass die Anwendung A einen solchen Angriff erkennen kann.

Durch die zweite, proprietäre Schnittstelle ST2 kann die Sicherheit gegenüber Manipulationen erhöht werden, indem die von dem Betriebssystem BS an die Anwendung A zurückgelieferten Ergebnisse überprüft werden. In Abhängigkeit vom Ergebnis der Überprüfung kann die Java-Card gegebenenfalls in einen gesicherten Zustand versetzt werden.

Die zweite Schnittstelle ST2 ermöglicht die Bereitstellung neuer Funktionen zur Überprüfung der Ergebnisse vorangegangener, sicherheitsrelevanter Vorgänge. Hierzu kann unabhängig vom Ergebniswert, der von dem Betriebssystem BS an die Anwendung A über die erste Schnittstelle ST1 zurückgegeben wird, intern ein weiterer Ergebniswert geführt werden, der an geeigneter Stelle im Programmablauf durch die Anwendung A abgefragt werden kann. Anhand dieses Ergebniswerts kann überprüft werden, ob die aufgerufenen Funktionen der Anwendung durch das Betriebssystem tatsächlich ausgeführt wurden. Hiermit erfolgt eine Verifikation, ob der von dem Betriebssystem erhaltene Ergebniswert auch dem tatsächlichen Ergebnis entspricht. Darüber hinaus wird durch die zweite Schnittstelle ST2 bereitgestellte Methoden die Möglichkeit geboten, auf das Ergebnis einer Überprüfung zu reagieren. Beispielsweise kann die Java-Card abgeschaltet werden oder das zeitliche Verhalten der Java-Card verändert werden.

Durch die Bereitstellung der zweiten Schnittstelle ST2 können von dem Betriebssystem BS an die Anwendung A übertragene Ergebniswerte unabhängig überprüft werden. Auf diese Weise ist die erfolgreiche Erkennung von Angriffen und/oder Manipulationen möglich.

Die zweite Schnittstelle ST2 kann einer Anwendung das Melden eines erkannten Angriffs ermöglichen.

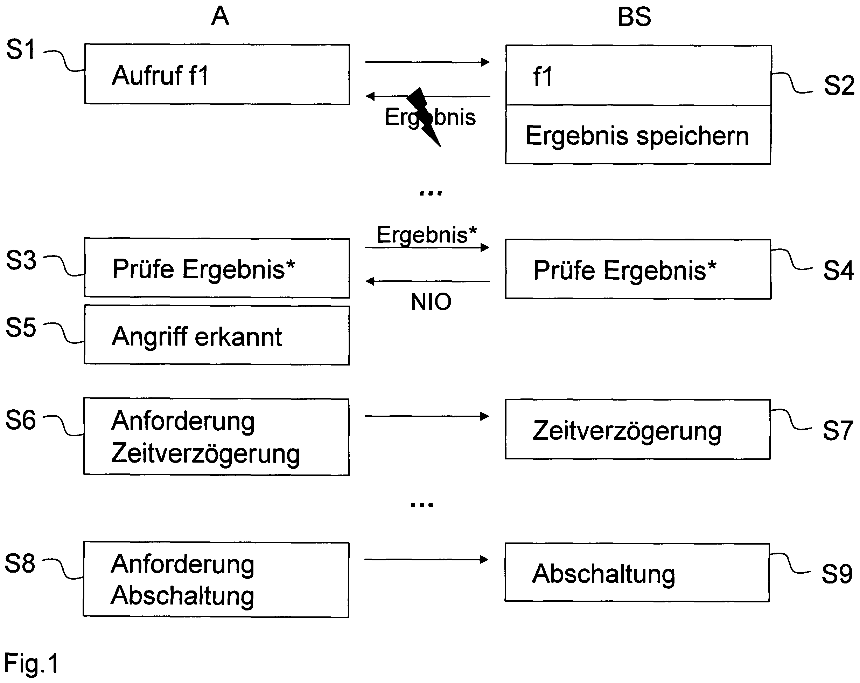

Fig. 1 stellt das beschriebene Verhalten der beschriebenen Java-Card schematisch dar. Die Anwendung A ruft in einem Verfahrensschritt S1 eine Funktion f1 des Betriebssystems BS auf. In Schritt S2 führt das Betriebssystem BS die Funktion f1 aus und speichert das hieraus hervorgehende Ergebnis ab. Weiterhin wird das Ergebnis über die erste Schnittstelle ST1 an die Anwendung A übertragen. Wird als Ergebniswert lediglich ein boolscher Wert an die Anwendung A als Ergebnis übertragen, so kann dieses auf einfache Weise verfälscht werden. Dies ist in Fig. 1 angenommen und schematisch durch den Pfeil angedeutet. Die Anwendung A empfängt somit zunächst von dem Betriebssystem BS als Ergebnis den Wert "Ergebnis*". In Schritt S3 wird der Ergebniswert "Ergebnis*" überprüft, indem dieser an das Betriebssystem BS übertragen wird. Das Betriebssystem BS überprüft den von der Anwendung A erhaltenen Ergebniswert "Ergebnis*". Hierbei wird festgestellt, dass "Ergebnis*" nicht mit dem in Schritt S2 an die Anwendung A übertragenen Ergebniswert "Ergebnis" übereinstimmt. In Reaktion hierauf übermittelt das Betriebssystem BS in Schritt S4 eine Information "NIO", welche eine Nicht-übereinstimmung des in Schritt S2 an die Anwendung A übermittelten Ergebniswerts und des überprüften Ergebniswerts signalisiert. In Schritt S5 wird somit durch die Anwendung A ein Angriff erkannt.

Die Kommunikation zwischen der Anwendung A und dem Betriebssystem BS erfolgt in den Schritten S3, S4 und S5 über die zweite Schnittstelle ST2. Über die Schnittstelle ST2 wird es der Anwendung A ferner ermöglicht, auf den in Schritt S5 erkannten Angriff zu reagieren. Optional kann die Anwendung dem Betriebssystem den erkannten Angriff mitteilen. Das Betriebssystem könnte unmittelbar auf diese Meldung reagieren. Vorzugsweise wartet das Betriebssystem jedoch zunächst darauf, dass die Anwendung eine Reaktion auf den Angriff steuert.

In Schritt S6 wird eine Anforderung einer Zeitverzögerung an das Betriebssystem BS übertragen. Dieses nimmt in Schritt S7 eine Zeitverzögerung des Ablaufs der Java-Card vor. Die von der Anwendung A angeforderte Zeitverzögerung kann eine zufällige Zeitdauer aufweisen.

Alternativ oder zusätzlich kann gemäß Schritt S8 die Anforderung einer Abschaltung der Java-Card an das Betriebssystem BS übertragen werden. Nach Erhalt der Anforderung wird die Java-Card in Schritt S9 durch das Betriebssystem abgeschaltet.

Die Schnittstelle ST2 bietet einer Anwendung insbesondere auch folgende, zusätzliche Funktionen, die nicht in Figur 2 dargestellt sind:
- Melden eines durch die Anwendung erkannten Angriffs,
- Bedingte Abschaltungs-Anforderung an das Betriebssystem, welche ein Abschalten durch das Betriebssystem auslöst, falls zuvor ein Fehler erkannt oder gemeldet wurde und
- Rücksetzen des Ergebniswertspeichers des letzten Funktionsaufrufes in einen vordefinierten Zustand.

Die Meldung eines erkannten Angriffs ermöglicht eine flexiblere Steuerung durch die Anwendung und/oder bietet dem Betriebssystem eine bessere Entscheidungsgrundlage für eventuelle eigene Steuerungsmaßnahmen.

In einer sichereren Ausgestaltung wird das Ergebnis der Angriffsprüfung unabhängig von dem Ergebnis gemeldet. Auch eine bedingte Abschaltungs-anforderung kann durch die Anwendung stets durchlaufen werden. Durch diese beiden Teilschritte wird der Ablauf unabhängig vom Ergebnis der Prüfung.

Das Rücksetzen eines Ergebniswertspeichers ermöglicht der Anwendung letztlich sogar eine Erkennung eines gezielten Angriffs auf die Ergebnisprüfung des Funktionsaufrufes. Wird der Ergebniswertspeicher des Betriebssystems beispielsweise auf den Wert "0" rückgesetzt, kann die Anwendung mit einem Aufruf mit einem Ergebnis "1" die Funktion selbst testen. Diese Prüfung wäre dann sogar unabhängig von tatsächlichen Funktionsaufrufen möglich.

## Patentansprüche

1. Verfahren zum Ausführen einer Anwendung (A), die ausführbaren nativen oder interpretierbaren Code umfasst und Funktionen eines Betriebssystems (BS) aufruft, wobei das Betriebssystem (BS) ein Ergebnis eines jeweiligen Funktionsaufrufs (f1) an die Anwendung (A) überträgt, wobei das Verfahren auf einer Chipkarte, einem USB-Token oder einem Sicherheitsmodul ausgeführt wird,
**dadurch gekennzeichnet, dass**
die Anwendung (A) das Ergebnis eines jeweiligen Funktionsaufrufs auf eine Verfälschung hin überprüft, um einen Angriff zu erkennen, und
zur Überprüfung des Ergebnisses eines jeweiligen Funktionsaufrufs (f1) eine weitere Funktion des Betriebssystems (BS) durch die Anwendung (A) aufgerufen wird, die eine zentrale, einheitliche Überprüfung jeweiliger Ergebnisse unterschiedlicher Funktionsaufrufe durchführt.

2. Verfahren nach Anspruch 1, **dadurch gekennzeichnet, dass** der Aufruf einer jeweiligen Funktion des Betriebssystems (BS) durch die Anwendung (A) über eine erste Schnittstelle (ST1) und der Aufruf der weiteren Funktion durch die Anwendung (A) über eine zweite, insbesondere proprietäre, Schnittstelle (ST2) erfolgt.

3. Verfahren nach Anspruch 1 oder 2, **dadurch gekennzeichnet, dass** die Anwendung (A) einen durch die Anwendung erkannten Angriff an das Betriebssystem meldet.

4. Verfahren nach einem der Ansprüche 1 bis 3, **dadurch gekennzeichnet, dass** die Anwendung einen Prüfparameter an das Betriebssystem überträgt, der die aufgerufene Funktion identifiziert.

5. Verfahren nach einem der vorhergehenden Ansprüche, **dadurch gekennzeichnet, dass** eine Überprüfung des letzten Funktionsaufrufs erfolgt.

6. Verfahren nach Anspruch 5, **dadurch gekennzeichnet, dass** die Anwendung ein Rücksetzen eines Ergebniswertspeichers des letzten Funktionsaufrufes in einen vordefinierten Zustand aufruft.

7. Verfahren nach einem der vorhergehenden Ansprüche, **dadurch gekennzeichnet, dass** zur Überprüfung des Ergebnisses eines jeweiligen Funktionsaufrufs das von dem Betriebssystem (BS) ermittelte und an die Anwendung (A) übertragene Ergebnis an das Betriebssystem (BS) übertragen und durch dieses verifiziert wird.

8. Verfahren nach einem der Ansprüche 1 bis 7, **dadurch gekennzeichnet, dass** in Abhängigkeit des Ergebnisses der Überprüfung das weitere Verhalten des tragbaren Datenträgers (CC) durch die Anwendung (A) gesteuert wird.

9. Verfahren nach Anspruch 8, **dadurch gekennzeichnet, dass** die Steuerung des weiteren Verhaltens des tragbaren Datenträgers (CC) eine Zeitverzögerung und/oder eine Abschaltung umfasst.

10. Verfahren nach einem der vorhergehenden Ansprüche, **dadurch gekennzeichnet, dass** als Anwendung ein Java-Applet und als Betriebssystem eine Java virtuelle Maschine verwendet werden.

11. Verfahren nach einem der vorhergehenden Ansprüche, **dadurch gekennzeichnet, dass** zur Überprüfung des Ergebnisses eines jeweiligen Funktionsaufrufs ein Parameter an das Betriebssystem (BS) übertragen und durch dieses verifiziert wird, wobei der Parameter den Funktionsaufruf identifiziert.

12. Tragbarer Datenträger (CC), der dazu ausgebildet ist, ein Verfahren gemäß einem der vorhergehenden Ansprüche auszuführen.

13. Tragbarer Datenträger (CC), insbesondere Chipkarte, Sicherheitsmodul oder USB-Token, mit einem Betriebssystem (B) und einer ersten Schnittstelle (ST1), welche einer auf dem Datenträger ausführbaren Anwendung (A), die ausführbaren nativen oder interpretierbaren Code umfasst, den Aufruf von Funktionen des Betriebssystems (BS) ermöglicht, wobei das Betriebssystem (BS) eingerichtet ist ein Ergebnis eines jeweiligen Funktionsaufrufs (f1) an die Anwendung (A) zu übertragen, **dadurch gekennzeichnet, dass** das Betriebssystem eine zweite Schnittstelle (ST2) für die Anwendung bereitstellt, über welche die Anwendung dem Betriebssystem einen erkannten Angriff melden kann und die Anwendung (A) eine zentrale, einheitliche Überprüfung jeweiliger Ergebnisse unterschiedlicher Funktionsaufrufe durchführen lassen kann.

## Claims

1. A method for executing an application (A) that comprises executable native or interpretable code and calls functions of an operating system (BS), wherein the operating system (BS) transmits a result of a respective function call (fl) to the application (A), wherein the method is executed on a chip card, a USB token or a security module,
**characterized in that**
the application (A) checks the result of a respective function call for a falsification, so as to detect an attack, and
for checking the result of a respective function call (fl) a further function of the operating system (BS) is called by the application (A), which performs a central, uniform check of respective results of different function calls.

2. The method according to claim 1, **characterized in that** the call of a respective function of the operating system (BS) by the application (A) takes place via a first interface (ST1) and the call of the further function by the application (A) takes place via a second, in particular proprietary interface (ST2).

3. The method according to claim 1 or 2, **characterized in that** the application (A) reports an attack detected by the application to the operating system.

4. The method according to any one of claims 1 to 3, **characterized in that** the application transmits a check parameter to the operating system that identifies the called function.

5. The method according to any one of the preceding claims, **characterized in that** a check of the last function call takes place.

6. The method according to claim 5, **characterized in that** the application calls a reset of a result value memory of the last function call to a predefined state.

7. The method according to any one of the preceding claims, **characterized in that** for checking the result of a respective function call the result determined and transmitted to the application (A) by the operating system (BS) is transmitted to the operating system (BS) and verified by the same.

8. The method according to any one of claims 1 to 7, **characterized in that** in dependence on the result of the check, the further behavior of the portable data carrier (CC) is controlled by the application (A).

9. The method according to claim 8, **characterized in that** the control of the further behavior of the portable data carrier (CC) comprises a time delay and/ or a turning off.

10. The method according to any one of the preceding claims, **characterized in that** as the application a Java applet and as the operating system a Java virtual machine are used.

11. The method according to any one of the preceding claims, **characterized in that** for checking the result of a respective function call a parameter is transmitted to the operating system (BS) and verified by the same, wherein the parameter identifies the function call.

12. A portable data carrier (CC) configured to execute a method according to any one of the preceding claims.

13. A portable data carrier (CC), in particular a chip card, security module or USB token, with an operating system (B) and a first interface (ST1) which enables an application (A), which comprises executable native or interpretable code and is executable on the data carrier, to call functions of the operating system (BS), wherein the operating system (BS) is adapted to transmit a result of a respective function call (fl) to the application (A), **characterized in that** the operating system makes available a second interface (ST2) for the application, via which the application can report a detected attack to the operating system and the application (a) can have a central, uniform check of respective results of different function calls performed.

## Revendications

1. Procédé d'exécution d'une application (A) comprenant un code exécutable natif ou interprétable et appelant des fonctions d'un système d'exploitation (BS), cependant que le système d'exploitation (BS) transmet un résultat d'un appel de fonction (fl) respectif à l'application (A), cependant que le procédé est exécuté sur une carte à puce, sur un jeton USB ou sur un module de sécurité, **caractérisé en ce que**
l'application (A) vérifie le résultat d'un appel de fonction respectif pour discerner s'il y a falsification afin de reconnaître une attaque, et
pour la vérification du résultat d'un appel de fonction (f1) respectif, une autre fonction du système d'exploitation (BS) est appelée par l'application (A), laquelle effectue une vérification centrale uniforme de résultats respectifs de différents appels de fonction (f1).

2. Procédé selon la revendication 1, **caractérisé en ce que** l'appel d'une fonction respective du système d'exploitation (BS) par l'application (A) a lieu par l'intermédiaire d'une première interface (ST1), et que l'appel de l'autre fonction par l'application (A) a lieu par l'intermédiaire d'une deuxième interface (ST2).

3. Procédé selon la revendication 1 ou 2, **caractérisé en ce que** l'application (A) signale une attaque reconnue par l'application au système d'exploitation.

4. Procédé selon une des revendications de 1 à 3, **caractérisé en ce que** l'application transmet un paramètre de vérification au système d'exploitation, lequel identifie la fonction appelée.

5. Procédé selon une des revendications précédentes, **caractérisé en ce qu**'une vérification du dernier appel de fonction a lieu.

6. Procédé selon la revendication 5, **caractérisé en ce que** l'application appelle une remise d'une mémoire de valeur de résultat du dernier appel de fonction à un état prédéfini.

7. Procédé selon une des revendications précédentes, **caractérisé en ce que**, pour la vérification du résultat d'un appel de fonction respectif, le résultat déterminé par le système d'exploitation (BS) et transmis à l'application (A) est transmis au système d'exploitation (BS) et vérifié par ce dernier.

8. Procédé selon une des revendications de 1 à 7, **caractérisé en ce que,** en fonction du résultat de la vérification, le comportement ultérieur du support de données (CC) portable est commandé par l'application (A).

9. Procédé selon la revendication 8, **caractérisé en ce que** la commande du comportement ultérieur du support de données (CC) portable comprend un décalage temporel et/ou un arrêt.

10. Procédé selon une des revendications précédentes, **caractérisé en ce que,** en tant qu'application, c'est une applet Java qui est utilisée, et que, en tant que système d'exploitation, c'est une machine virtuelle Java qui est utilisée.

11. Procédé selon une des revendications précédentes, **caractérisé en ce que,** pour la vérification du résultat d'un appel de fonction respectif, un paramètre est transmis au système d'exploitation (BS) et vérifié par ce dernier, cependant que le paramètre identifie l'appel de fonction.

12. Support de données (CC) portable conçu pour exécuter un procédé suivant une des revendications précédentes.

13. Support de données (CC) portable, en particulier carte à puce, module de sécurité ou jeton USB, comportant un système d'exploitation (B) et une première interface (ST1), laquelle, à une application (A) qui est exécutable sur le support de données et qui comprend un code exécutable natif ou interprétable, permet l'appel de fonctions du système d'exploitation (BS), cependant que le système d'exploitation (BS) est conçu pour transmettre un résultat d'un appel de fonction (fl) respectif à l'application (A), **caractérisé en ce que** le système d'exploitation fournit une deuxième interface (ST2) pour l'application, par l'intermédiaire de laquelle l'application peut signaler au système d'exploitation une attaque reconnue, et l'application (A) peut faire effectuer une vérification centrale uniforme de résultats respectifs de différents appels de fonction.
